# EUROPEAN PATENT APPLICATION

(11) **EP 1 098 541 A1**
(43) Date of publication of application: **09.05.2001**
(21) Application number: 99610068.1
(22) Date of filing: 05.11.1999
(51) Int. Cl.: H04Q 7/22

(54) **A method of transmitting dynamic information to a large number of mobile stations, a cellular telephone network and a mobile station for use in such a network**

(71) Applicant: TELEFONAKTIEBOLAGET LM ERICSSON, 126 25 Stockholm (SE)
(72) Inventor: Holström, Thomas, 24010 Dalby (SE); Edlund, Peter, 147 34 Tumba (SE); Novak, Lars, 247 91 Bjärred (SE)
(74) Representative: Boesen, Johnny Peder

(57) **Abstract**

A method of transmitting information from a service provider (14; SP) through a base station (2, 3; BS) to a large number of mobile stations (6, 7, 8, 9, 10, 11, 12 and 13; MS) comprises transmitting from a mobile station (MS) a first type of message (SMS(1)) requesting the information, transmitting to the mobile station (MS) a second type of message (SMS(2)) comprising parameters enabling the mobile station to interpret the information, broadcasting the information through the base station (2, 3; BS), and receiving said information in the mobile station (MS) using said parameters. The parameters are stored at the service provider (14; SP), and the first type of message (SMS(1)) is transmitted from the mobile station (MS) to the service provider (SP) and the parameters are transmitted from the service provider to the mobile station. This allows the service provider to determine to which mobile stations information is transmitted.

## Description

The invention relates to a method of transmitting dynamic information from a service provider through at least one base station to a large number of mobile stations, comprising the steps of transmitting a message from a mobile station, said message requesting said dynamic information; transmitting to said mobile station parameters that will enable the mobile station to interpret said dynamic information; broadcasting said dynamic information through the at least one base station; and receiving said dynamic information in said mobile station using said parameters. The invention further relates to a cellular telephone network adapted to transmit such information and a mobile station for use in such a network.

Normally, cellular telephone networks are used for two-way communication between a base station and each of a number of cellular telephones or mobile stations. However, it is also possible to transmit identical information (voice or data) to a large number of mobile stations simultaneously. Examples of such information could be football results or other sports scores sent during an ongoing game, stock exchange rates, weather reports, traffic information and airline schedules.

For such a service to be meaningful, the information must be sent, received and read before it is changed again. This means that it must be sent to all the mobile stations simultaneously or at least within a very short time period. Further, many providers of such services want to be able to charge the receivers of the information and to control that the information is only received by mobile stations which have an active subscription to that service.

Two methods of transmitting such information are presently known. In a so-called cell broadcast service the messages are broadcast to everyone in a location area. This means that all receivers get the information simultaneously, but the problem is that anyone with a mobile station capable of receiving cell broadcast could potentially receive the information. Hence, it is not possible to differentiate between users who have paid for the service and users who have not paid. Therefore, in a cell broadcast service no charging can be done.

The other method is the so-called Short Message Service (SMS) which is a point-to-point service in which a message can be sent to or from one specific mobile subscriber. The problem with this service is that the message must be sent to each mobile station one after the other. Thus, as the number of subscribers is often quite large (i.e. up to several thousands), the time it takes to send out the information to all recipients is quite long. Therefore, the information might easily become outdated before it reaches the last recipient. Further, it might lead to overload of the network resources.

EP 828 355 discloses a system in which messages are sent from a base station to a number of mobile stations by modifying a direct sequence code division multiple access (DS-CDMA) cellular system. In a DS-CDMA system the base station transmits the same digital information to all mobile stations communicating on a common frequency. However, a unique spreading code is assigned to each mobile station. Thus it will only be able to interpret the information spread with its assigned spreading code and it will ignore the information intended for other mobile stations. By assigning a spreading code common to those mobile stations that subscribe to a specific information service of the type mentioned above (i.e. modifying the normal DS-CDMA system), it is ensured that other mobile stations cannot receive the information. However, the use of the spreading codes is an integrated part of the DS-CDMA communication between the base station and the mobile stations, and thus only the network operator running the base station can control the function - and not an external service provider. Most service providers themselves want to be able to add or delete individual mobile stations from the active list of subscribers of their information services, and thus they also want to handle requests from mobile stations who want to be entered on the list.

Thus, it is an object of the invention to provide a method of transmitting dynamic information from a service provider to a large number of mobile stations, in which it is possible for the service provider himself to control which mobile stations should be capable of receiving and decoding the information correctly.

According to the invention, this is achieved in that the parameters enabling a mobile station to interpret the dynamic information are stored at the service provider, and that the message from the mobile station requesting the information is transmitted to the service provider and the parameters are transmitted therefrom to the mobile station.

By having the parameters stored at the service provider and directing the requesting messages from mobile stations wanting to subscribe to the service to the service provider, it is possible for him to control the distribution of the service himself. The message transmitting the parameters from the service provider to a mobile station will be handled by the cellular network like any other normal message.

The service provider will get an even better control when, as stated in claim 2, the dynamic information is encrypted by the service provider before being broadcast, and the message comprising the parameters further comprises a decryption key for decryption of said encrypted information in the mobile station.

When, as stated in claim 3, the method further comprises the steps of transmitting, from a mobile station receiving said dynamic information to the service provider, a third type of message requesting deactivation of said dynamic information, and transmitting, from the service provider to said mobile station, a fourth type of message deactivating said parameters in said mobile station, it also is possible for the service provider to cancel a mobile station from the list of subscribers, when this is requested by the mobile station.

In expedient embodiments of the invention, as stated in claims 4 and 5, the dynamic information may be transmitted in a cellular telephone network, which may be a GSM network, and, as stated in claim 6, the messages may be Short Message Service (SMS) messages.

As mentioned, the invention further relates to a cellular telephone network comprising a service provider and at least one base station and adapted to transmit dynamic information from the service provider through the at least one base station to a large number of mobile stations, said network further being adapted to receive from a mobile station a first type of message requesting said dynamic information, to transmit to said mobile station a second type of message comprising parameters that will enable the mobile station to interpret said dynamic information, and to broadcast said dynamic information through the at least one base station.

When, as stated in claim 7, the parameters are stored at the service provider, and the network is adapted to transmit the first type of message from the mobile station to the service provider and to transmit the parameters from the service provider to the mobile station, it is possible for the service provider himself to determine to which mobile stations the information can be transmitted.

The service provider will get an even better control when, as stated in claim 8, the network is adapted to encrypt the dynamic information by the service provider before broadcasting it, and the second type of message further comprises a decryption key for decryption of the encrypted information in the mobile station.

When, as stated in claim 9, the network is further adapted to receive a third type of message from a mobile station receiving said dynamic information, said message requesting deactivation of said dynamic information, and to transmit to said mobile station a fourth type of message deactivating said parameters in said mobile station, it also is possible for the service provider to cancel a mobile station from the list of subscribers, when this is requested by the mobile station.

In expedient embodiments of the invention, the network may be a GSM network, as stated in claim 10, and the messages may be Short Message Service (SMS) messages as stated in claim 11.

As mentioned, the invention further relates to a mobile station for use in a cellular telephone network, said network comprising a service provider and at least one base station and being adapted to transmit dynamic information from the service provider through the at least one base station to a large number of mobile stations, said mobile station being adapted to transmit a first type of message requesting said dynamic information, receive a second type of message comprising parameters that will enable the mobile station to interpret said dynamic information, and to receive said dynamic information using said parameters.

When, as stated in claim 12, the mobile station is adapted to transmit the first type of message to the service provider and to receive the parameters from the service provider, it is possible for the service provider himself to determine to which mobile stations the information can be transmitted.

The service provider will get an even better control when, as stated in claim 13, the mobile station is adapted to receive in said second type of message a decryption key and to use said key for decryption of said dynamic information.

When, as mentioned in claim 14, the mobile station is further adapted to transmit a third type of message requesting deactivation of said dynamic information, and to receive a fourth type of message deactivating said parameters, it also is possible for the service provider to cancel a mobile station from the list of subscribers, when this is requested by the mobile station.

In expedient embodiments of the invention, the mobile station may be a GSM telephone adapted for Cell Broadcast service, wherein the parameters are Cell Broadcast Message Indications, as stated in claim 15, and the messages may be Short Message Service (SMS) messages, as stated in claim 16.

Further, as stated in claim 17, the mobile station may comprise an SMS application adapted to read said second and fourth types of message and, in response thereto, to activate/deactivate said Cell Broadcast Message Indications.

The invention will now be described more fully below with reference to the drawing, in which
figure 1 shows a network in which the invention may be used,
figure 2 shows a Message Indication list and an SMS application in a mobile station for use in the network of figure 1,
figure 3 shows a procedure for activation of Message Indications in the Message Indication list of figure 2, and
figure 4 shows a procedure for deactivation of Message Indications in the Message Indication list of figure 2.

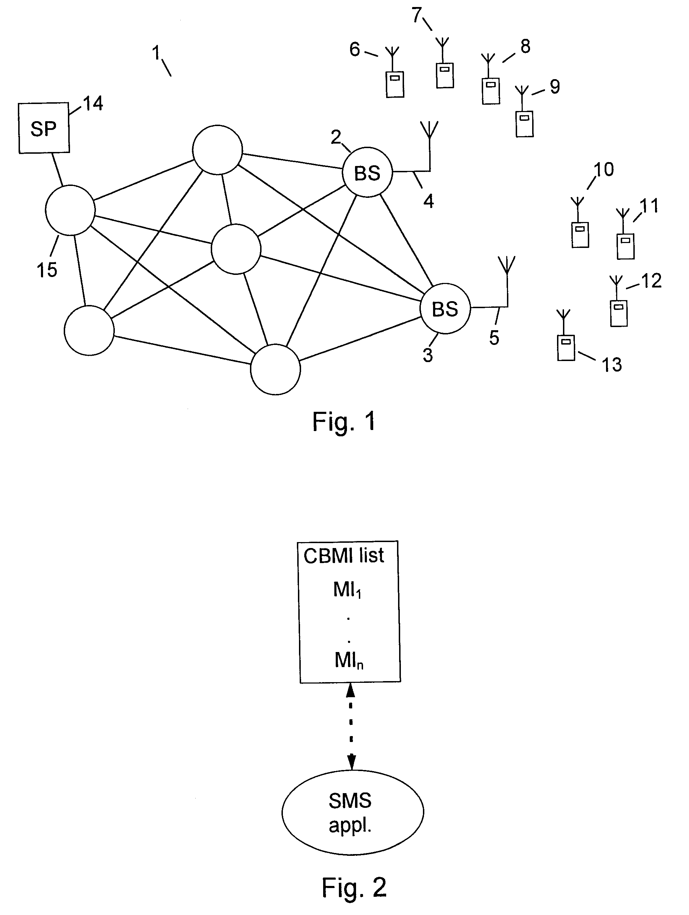

Figure 1 shows a network 1 in which the invention may be used. The network has a number of network elements of which the elements 2 and 3 are shown as base stations in a cellular telephone system, which e.g. may be a GSM system. The other elements may be base stations of the same type or they may be other types of network elements well known in telecommunications networks. The base stations 2, 3 are provided with antennas 4, 5 by means of which they communicate with a number of mobile stations 6, 7, 8, 9, 10, 11, 12 and 13 such as cellular telephones. Normally, a base station communicates on a two-way basis with each mobile station within its cell individually. This is the case e.g. when one of the cellular telephones is used for a telephone conversation with another telephone (mobile or not) somewhere else in the network. In case of a GSM network, the communication between the base station and the mobile stations is of the TDMA (Time Division Multiple Access) type while other networks are based on CDMA (Code Division Multiple Access) communication.

Although the network is mainly used for individual communication with the mobile stations it may also be used in connection with a so-called Cell Broadcast service, which means that a base station broadcasts a common message which may be received by any mobile station within its cell simultaneously. This service is mainly used for text messages which are intended to be presented on a display of the telephones. This service enables the network operator to send a common message to all mobile stations at the same time, but it is not possible to send the message to some of the mobile stations (subscribers to a special service) and not to others. The Cell Broadcast service uses a number of Cell Broadcast Message Indications (CBMI) to indicate the source and the type of a message to the mobile stations. Messages of this type may be from the network operator himself or they may be sent on behalf of an external service provider. Figure 1 shows such a service provider 14 connected to the network at the network element 15. Examples of information from a service provider could be football results or other sports scores sent during an ongoing game, stock exchange rates, weather reports, traffic information and airline schedules.

The network may also be used for the transmission of SMS (Short Message Service) messages. These are also text messages and they may be sent either to a mobile station or from a mobile station. A common text message intended for several mobile stations may also be sent as an SMS message, but then it must be sent to each mobile station individually, one after the other. This service allows a service provider to send a common message to some of the mobile stations (subscribers to a special service) and not to others and thus to charge for the service. However, if the information is sent to a large number of mobile stations it will take a long time before they have all received it.

The invention enables a service provider to send a common message to a large number of mobile stations in such a way that the message is sent to some mobile stations (i.e. the subscribers to the special service) and not to others, and thus the service can be made chargeable.

In an embodiment of the invention, which can be used in e.g. a GSM system, the Cell Broadcast service is used, but some of the Cell Broadcast capacity is reserved for services for chargeable information. This can be achieved by reserving an interval of Cell Broadcast Message Indications. Any user wanting to receive chargeable information must subscribe to the related Message Indications from the service provider.

The activation and deactivation (subscribe/unsubscribe) of these reserved Message Indications in the individual mobile stations cannot be performed from the mobile station itself. In order to provide the service provider with the possibility of adding or deleting individual mobile stations to or from the active list of subscribers of his information services himself, the activation/deactivation of the reserved Message Indications in the individual mobile stations is performed by the service provider. This can be done by means of the above-mentioned SMS service, e.g. using User Data Header in an SMS class 2 or class 1. A special SMS application in the mobile station is adapted to read the SMS message and to activate/deactivate the related Message Indication(s). This is shown in figure 2 which indicates the presence of a message indication list (CBMI-list) having the Message Indications MI₁, .., MIₙ as well as a special SMS application. Whenever required, the service provider can activate or deactivate the reserved Message Indications by means of an SMS message. When a user of a mobile station wants to subscribe or unsubscribe a service from a service provider he can, by sending an SMS message to the service provider, request an activation/deactivation of a specific Cell Broadcast Message Indication, which may then be performed by the service provider as described above.

Using the SMS service for the activation/deactivation of the reserved Message Indications is just one possibility. Other possibilities may be used instead. One example is the use of a WAP/WML page.

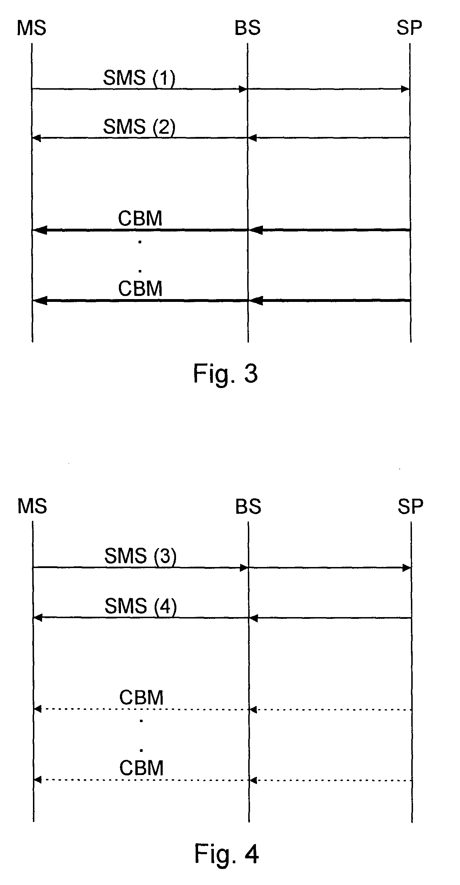

Figure 3 shows an example of the procedure for activation of one of the reserved Message Indications and for subsequent transmission of the related chargeable Cell Broadcast messages.

First, the mobile station user initiates the sending of an SMS message SMS(1) from the mobile station MS through the base station BS to the service provider SP. In the SMS message the user indicates to which chargeable information services a subscription is wanted and should therefore be made. SMS(1) also authenticates the user towards the service provider so that the correct user can be charged for the service.

The service provider, having received the message SMS(1) from the mobile station MS, sends a return SMS message SMS(2) containing a list of Message Indications via the base station BS to the mobile station MS. In the mobile station MS, the corresponding Message Indications in the CBMI-list are activated, i.e. noted as being subscribed to, by the SMS application.

The next time the relating Cell Broadcast Message (CBM) with a Message Indication within the reserved range is sent out from the service provider SP it will be received in the mobile station MS. The SMS application verifies the Message Indication towards the recently updated CBMI-list. If the corresponding Message Indication is activated in the list the Cell Broadcast Message is displayed to the user of the mobile station MS. This procedure will be repeated, as is also shown in figure 3, for subsequent transmissions of the same Cell Broadcast Message, until the CBMI-list is changed again due to a new request from the user.

Figure 4 shows an example of the corresponding procedure for deactivation of one of the reserved Message Indications.

Here again, the mobile station user initiates the sending of an SMS message SMS(3) from the mobile station MS through the base station BS to the service provider SP. In the SMS message the user indicates to which chargeable information services a subscription is no longer wanted and should therefore be cancelled. SMS(3) also authenticates the user towards the service provider to ensure that the user is no longer charged for the service.

The service provider, having received the message SMS(3) from the mobile station MS, sends a return SMS message SMS(4) containing a list of Message Indications via the base station BS to the mobile station MS. In the mobile station MS, the corresponding Message Indications in the CBMI-list are deactivated, i.e. noted as being no longer subscribed to, by the SMS application.

The next time the relating Cell Broadcast Message (CBM) is sent out from the service provider SP the SMS application verifies the Message Indication towards the recently updated CBMI-list. As the corresponding Message Indication is no longer activated in the list the Cell Broadcast Message is not displayed to the user of the mobile station MS. Therefore, the CBM message is shown by a dotted line in figure 4. The procedure is again repeated, as is also shown in figure 4, for subsequent transmissions of the same Cell Broadcast Message, until the CBMI-list is changed again due to a new request from the user.

It should be noted that the invention uses existing Cell Broadcast message identifiers (0000-03E7 hex, operator specific series) and SMS mechanisms (user data indications) with very minor modifications and combines them with a small and easy application in the mobile station.

The invention may be further improved by sending the chargeable Cell Broadcast messages in an encrypted format, thus obtaining a higher level of protection against fraudulent use. A decryption key may be supplied to the user in the SMS activation message, together with the Message Indication corresponding to the subscribed messages. If the service provider chooses to send the subscribed information in an encrypted format, the return SMS message SMS(2) shall contain the Message Indication(s) as well as the decryption keys needed to decrypt the subscribed information. Subsequently, the SMS application will use the supplied decryption keys to decrypt the received information in a well known manner.

Another improvement, which can provide a higher level of protection against fraudulent use through e.g. unlegal copying, is to update the Message Indications after a certain time. It could be at regular time intervals, e.g. each hour. The update is performed by sending from the service provider an SMS message corresponding to SMS(2) containing a list of the updated Message Indications and then using these updated Message Indications in the following Cell Broadcast Messages.

The solution allows service providers to charge for information sent over the Cell Broadcast service. By using the Cell Broadcast service, the information delay will be kept low allowing all recipients to receive the information at virtually the same time.

Although a preferred embodiment of the present invention has been described and shown, the invention is not restricted to it, but may also be embodied in other ways within the scope of the subject-matter defined in the following claims.

## Claims

1. A method of transmitting dynamic information from a service provider (14; SP) through at least one base station (2, 3; BS) to a large number of mobile stations (6, 7, 8, 9, 10, 11, 12 and 13; MS), comprising the steps of:
• transmitting from a mobile station (MS) a first type of message (SMS(1)) requesting said dynamic information,
• transmitting to said mobile station (MS) a second type of message (SMS(2)) comprising parameters that will enable the mobile station to interpret said dynamic information,
• broadcasting said dynamic information through the at least one base station (2, 3; BS), and
• receiving said dynamic information in said mobile station (MS) using said parameters,
**characterized** in that said parameters are stored at the service provider (14; SP), and that the first type of message (SMS(1)) is transmitted from the mobile station (MS) to the service provider (SP) and the parameters are transmitted from the service provider (SP) to the mobile station (MS).

2. A method according to claim 1, **characterized** in that said dynamic information is encrypted by the service provider (SP) before being broadcast, and that said second type of message (SMS(2)) further comprises a decryption key for decryption of said encrypted information in the mobile station (MS).

3. A method according to claim 1 or 2, **characterized** in that it further comprises the steps of:
• transmitting, from a mobile station (MS) receiving said dynamic information to the service provider (SP), a third type of message (SMS(3)) requesting deactivation of said dynamic information, and
• transmitting, from the service provider (SP) to said mobile station (MS), a fourth type of message (SMS(4)) deactivating said parameters in said mobile station (MS).

4. A method according to claims 1-3, **characterized** in that said dynamic information is transmitted in a cellular telephone network.

5. A method according to claim 4, **characterized** in that the cellular telephone network is a GSM network.

6. A method according to claims 1-5, **characterized** in that said messages are Short Message Service (SMS) messages.

7. A cellular telephone network (1) comprising a service provider (14; SP) and at least one base station (2, 3; BS) and adapted to transmit dynamic information from the service provider through the at least one base station to a large number of mobile stations (6, 7, 8, 9, 10, 11, 12 and 13; MS), said network further being adapted to
• receive from a mobile station (MS) a first type of message (SMS(1)) requesting said dynamic information,
• transmit to said mobile station (MS) a second type of message (SMS(2)) comprising parameters that will enable the mobile station to interpret said dynamic information, and
• broadcast said dynamic information through the at least one base station (2, 3; BS),
**characterized** in that said parameters are stored at the service provider (14; SP), and that the network is adapted to transmit the first type of message (SMS(1)) from the mobile station (MS) to the service provider (SP) and to transmit the parameters from the service provider (SP) to the mobile station (MS).

8. A network according to claim 7, **characterized** in that it is adapted to encrypt said dynamic information by the service provider (SP) before broadcasting it, and that said second type of message (SMS(2)) further comprises a decryption key for decryption of said encrypted information in the mobile station (MS).

9. A network according to claim 7 or 8, **characterized** in that it is further adapted to
• receive a third type of message (SMS(3)) from a mobile station (MS) receiving said dynamic information, said message requesting deactivation of said dynamic information, and
• transmit to said mobile station (MS) a fourth type of message (SMS(4)) deactivating said parameters in said mobile station (MS) .

10. A network according to claims 7-9, **characterized** in that it is a GSM network.

11. A network according to claims 7-10, **characterized** in that said messages are Short Message Service (SMS) messages.

12. A mobile station (MS) for use in a cellular telephone network (1), said network comprising a service provider (14; SP) and at least one base station (2, 3; BS) and being adapted to transmit dynamic information from the service provider through the at least one base station to a large number of mobile stations (6, 7, 8, 9, 10, 11, 12 and 13; MS), said mobile station being adapted to
• transmit a first type of message (SMS(1)) requesting said dynamic information,
• receive a second type of message (SMS(2)) comprising parameters that will enable the mobile station to interpret said dynamic information, and
• receive said dynamic information using said parameters,
**characterized** in that it is adapted to transmit the first type of message (SMS(1)) to the service provider (SP) and to receive the parameters from the service provider (SP) .

13. A mobile station according to claim 12, **characterized** in that it is adapted to receive in said second type of message (SMS(2)) a decryption key and to use said key for decryption of said dynamic information.

14. A mobile station according to claim 12 or 13, **characterized** in that it is further adapted to
• transmit a third type of message (SMS(3)) requesting deactivation of said dynamic information, and
• receive a fourth type of message (SMS(4)) deactivating said parameters.

15. A mobile station according to claims 12-14, **characterized** in that it is a GSM telephone adapted for Cell Broadcast service and that said parameters are Cell Broadcast Message Indications.

16. A mobile station according to claim 15, **characterized** in that said messages are Short Message Service (SMS) messages.

17. A mobile station according to claim 16, **characterized** in that it comprises an SMS application adapted to read said second and fourth types of message and, in response thereto, to activate/deactivate said Cell Broadcast Message Indications.
